# FASCICULE DE BREVET EUROPEEN

(11) **EP 1 517 347 B1**
(45) Date de publication et mention de la délivrance du brevet: **06.06.2012**
(21) Numéro de dépôt: 04103331.7
(22) Date de dépôt: 13.07.2004
(51) Int. Cl.: H01H 71/46, H01H 89/06

(54) **Ensemble de départ-moteur à câblage de contrôle.**
Motoransteuerbaugruppe mit Steuerleitungen.
Motor starter block with control wiring

(30) Priorité: 29.07.2003 FR 0309270
(43) Date de publication de la demande: 23.03.2005
(73) Titulaire: Schneider Electric Industries SAS, 92500 Rueil-Malmaison (FR)
(72) Inventeur: Latour, Emmanuel, 21230, Cussy le Chatel (FR); Perrocheau, Régis, 21560, Couternon (FR); Sinthomez, Daniel, 21491, Pont de Pagny (FR)

(56) Documents cités:
- DE-U- 29 507 456
- FR-A- 2 805 094

## Description

La présente invention se rapporte à un ensemble de départ-moteur, c'est-à-dire un ensemble composé d'un appareil disjoncteur et d'un appareil contacteur, en vue de commander l'alimentation et la protection d'une charge telle qu'un moteur, le disjoncteur étant muni d'un additif frontal de signalisation d'état à contacts auxiliaires normalement ouverts (NO) et/ou normalement fermés (NC). Pour assurer une communication avec un système de commande ou de contrôle, un tel ensemble est doté d'un circuit imprimé de communication connecté à la bobine du contacteur et à l'additif de signalisation d'état du disjoncteur.

Un ensemble de départ-moteur combine de manière usuelle un disjoncteur et un contacteur montés en série sur une ligne constituée de conducteurs de puissance. Les boîtiers des deux appareils sont généralement assemblés entre eux ou posés sur un socle com-mun. Comme on le sait, le contacteur assure la commande volontaire de la fermeture de la ligne (marche) et de son ouverture (arrêt), tandis que le disjoncteur a notamment pour rôle de garantir l'ouverture de la ligne quand survient un défaut électrique affectant l'intensité ou la tension.

Un ensemble de départ-moteur modulaire selon le préambule de la revendication 1 est décrit dans le document FR 2 805 094 et comprend un plastron rapporté à l'avant du module constitué par le contacteur et le disjoncteur. Ce plastron assure l'interconnexion de contrôle entre d'une part un bloc de contrôle commun à plusieurs modules et d'autre part le contacteur et le disjoncteur du module considéré. Par "contrôle", on désigne ici les fonctions de commande de bobine du contacteur et de signalisation d'état (par exemple "marche" ou "déclenché") du disjoncteur. Le dispositif antérieur est lié à la présence d'un bloc répartiteur de contrôle capable de transmettre les signaux à plusieurs modules juxtaposés et nécessite un plastron assez complexe.

Le document DE 295 07 456 montre un ensemble de départ-moteur doté d'un contacteur et d'un disjoncteur montés sur un socle d'alimentation de puissance. Un circuit imprimé amovible est enfiché au moyen de bornes déconnectables sur les bornes du contacteur- ou de deux contacteurs disposés côte à côte quand un montage inverseur est souhaité - afin d'assurer une liaison de contrôle du disjoncteur et des contacteur avec un bus de terrain. Le circuit imprimé est recouvert par un plastron porteur d'un bouton de commande des contacteurs. Cet ensemble est mécaniquement et structurellement peu satisfaisant, notamment du fait de la tenue mécanique insuffisante de la carte à circuit imprimé et de l'absence de précisions visant la mise en oeuvre du câblage.
L'invention a notamment pour but de simplifier le dispositif de transmission des signaux de contrôle d'un ensemble de départ-moteur, à l'aide de moyens dont le montage est pratique et mécaniquement résistant.

Selon l'invention, dans un ensemble de départ-moteur du type décrit en préambule,
- le circuit imprimé de communication est doté d'un premier connecteur qui assure la liaison avec un câble d'interconnexion relié à l'additif de signalisation, le câble d'interconnexion sortant verticalement du bloc de communication extérieurement aux boîtiers des appareils contacteur et disjoncteur,
- le circuit imprimé de communication est doté d'un second connecteur qui assure la liaison avec un contrôleur programmable par l'intermédiaire d'un câble de communication.

Le câble de communication peut avantageusement être rattaché à sa première extrémité au second connecteur par une connexion détachable de type RJ45, et assurer à sa deuxième extrémité la liaison avec le contrôleur programmable via un concentrateur auquel sont raccordés en parallèle des câbles de communication provenant d'autres ensembles de départ-moteur.

Le circuit imprimé de communication peut de façon commode comprendre un troisième connecteur à relier à un contacteur-inverseur et un quatrième connecteur d'alimentation auxiliaire.

Il peut être avantageux que le circuit imprimé comporte un évidement pour l'accès à un poussoir d'un organe de support des contacts mobiles de puissance du contacteur.

De préférence, le bloc de communication est fixé de manière amovible à l'avant d'un bloc de contrôle portant des bornes de contrôle et solidarisé avec le boîtier du contacteur à l'avant de celui-ci, et le bloc de communication peut alors être connecté frontalement par des broches dans des bornes élastiques du bloc de contrôle.

D'autres caractéristiques et avantages vont apparaître dans la description détaillée qui suit, avec référence à un mode de réalisation donné à titre d'exemple et représenté par les dessins annexés.
La figure 1 représente en perspective avant un ensemble de départ-moteur conforme à l'invention.
La figure 2 en montre une variante.
La figure 3 est une vue en perspective avant du bloc de communication lié à l'additif du disjoncteur de l'ensemble de la figure1.
La figure 4 en est une vue en perspective arrière.
La figure 5 est une vue en perspective éclatée du bloc de communication.
La figure 6 est un schéma illustrant les liaisons du bloc de communication.

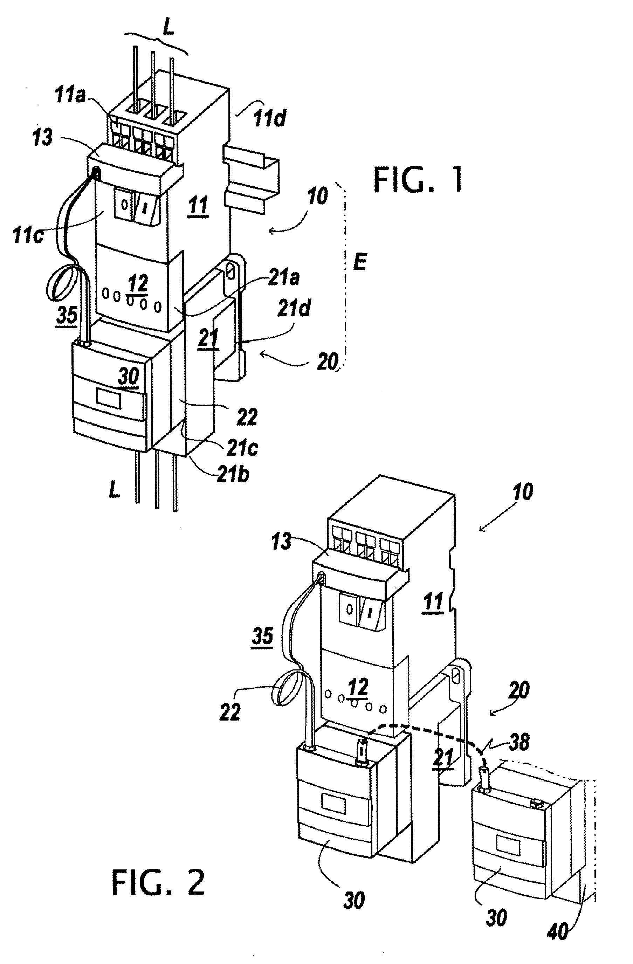

L'ensemble de départ-moteur E de la figure 1 comprend un disjoncteur-moteur 10 et un contacteur 20 dont les boîtiers respectifs 11,21 sont assemblés entre eux par tous moyens usuels (plaquette intermédiaire, socle, ..). En variante, les deux appareils 10,20 peuvent aussi être montés indépendamment sur un support arrière. Des lignes de puissance L sont connectées en amont à des bornes de puissance amont 11a du disjoncteur et en aval à des bornes de puissance aval 21b du contacteur. Pour assurer la continuité des lignes, les bornes aval 11b du disjoncteur sont connectées aux bornes amont 21a du contacteur par un bornier d'interconnexion de puissance 12.

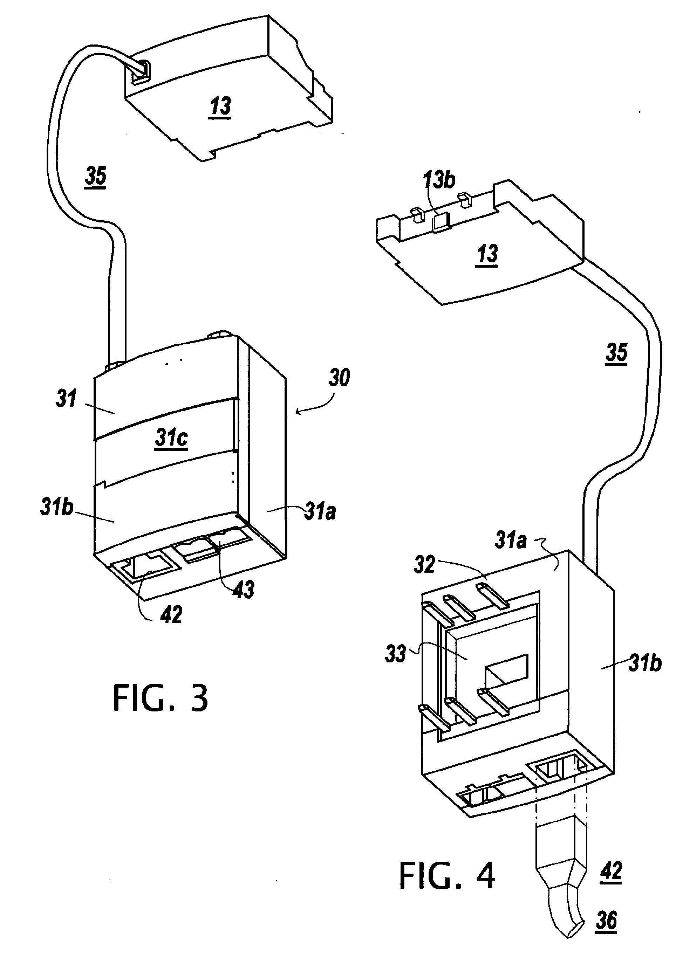

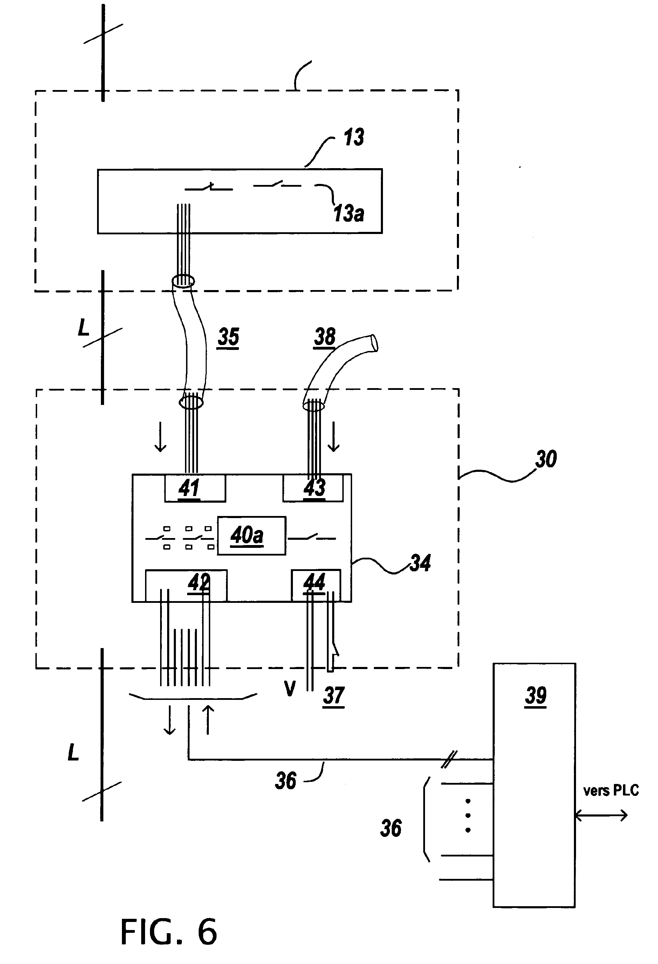

Un additif de signalisation de défaut 13 est emboîté dans une ouverture frontale du boîtier 11 du disjoncteur. L'additif 13 comporte de manière connue un boîtier isolant enfermant des contacts normalement ouverts (NO) et/ou des contacts normalement fermés (NC) 13a (voir figure 6) par exemple actionnés par le mécanisme interne du disjoncteur via un passage 13b prévu à l'arrière de l'additif (voir figure 4). Des additifs de ce type sont décrits dans les documents EP 0 511 043 et FR 2 807 869. Un bouton marche / arrêt ou deux boutons marche et arrêt 14 sont prévus sur la face avant 11c du disjoncteur. Le boîtier 11 de celui-ci est par exemple fixé par sa face arrière 11d à un support, par exemple un profilé (figure 1). Par côté "avant", on désigne ici le côté des appareils apte au dialogue et accessible à l'opérateur.

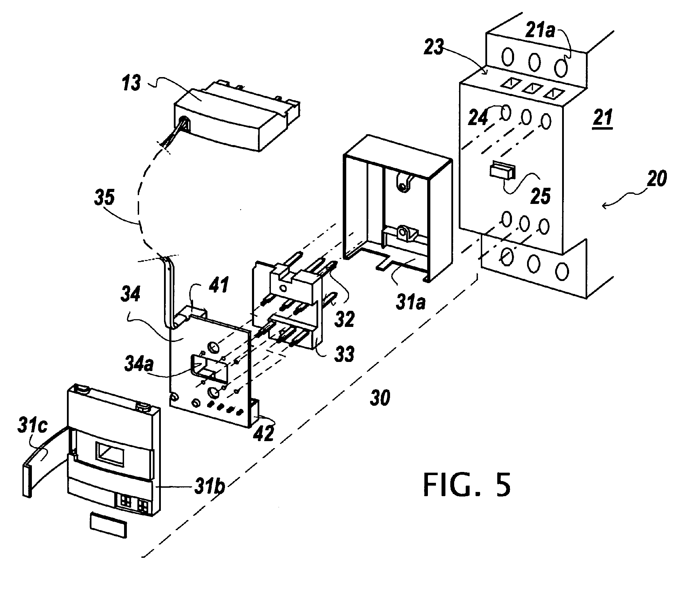

Le boîtier 21 du contacteur 20 présente une face avant 21c et une face arrière 21d. La face avant 21c a la particularité de comporter, devant les bornes de puissance 21a, 21b, un bloc de contrôle saillant 22 doté des bornes de contrôle hautes et basses 23 (bornes de bobine et bornes de signalisation) usuelles pour un contacteur et munies d'orifices frontaux 24 d'accès pour les conducteurs (voir figure 5). Le bloc présente une fenêtre centrale pour le passage d'un poussoir déplaçable 25 formant l'extrémité libre du porte-contacts du contacteur, ce poussoir étant avancé à l'état repos du contacteur et reculé à l'état marche du contacteur.

Un bloc de communication 30 est placé de manière amovible à l'avant du bloc de contrôle 22. Il comporte un boîtier isolant 31 composé d'un corps 31a et d'un couvercle 31b. Dans le boîtier est situé un circuit imprimé 34 qui peut être connecté par des broches 32 aux bornes de contrôle 23 du bloc de contrôle du contacteur. Les broches 32 sont incluses dans un support isolant 33 qui est logé dans le boîtier 31. Quand les bornes de contrôle 23 sont du type élastique, notamment à boucle, les broches sont engagées frontalement de façon directe dans ces bornes. On peut aussi concevoir sans difficulté l'engagement des broches dans des bornes de contrôle à vis.

Le couvercle 31b du boîtier isolant 31 présente une porte 31c qui permet d'accéder au poussoir 25, tandis que le circuit imprimé 34 est doté d'un évidement central 34a dans le même but. On remarque que le bloc de communication 30 dépasse vers l'avant par rapport à la face avant 11c du disjoncteur. Le bloc 30 est relié par un câble d'interconnexion 35 à l'additif 13 et par un câble de communication déconnectable 36 à un organe de commande ou de gestion d'automatismes. Le câble 36 peut acheminer, outre le signal de commande du contacteur, tous signaux propres à caractériser des états du disjoncteur et éventuellement du contacteur. L'organe de commande ou de gestion auquel est relié le câble 36 peut être une entrée d'automate (contrôleur) programmable ou, comme illustré figure 6, une entrée d'un concentrateur 39 auquel sont connectés des câbles 36 provenant d'autres ensembles de départ-moteur, le concentrateur étant à son tour relié à une entrée d'automate. Le câble 35 achemine les signaux d'état provenant de l'additif et concernant les états du disjoncteur. Pour utiliser au mieux l'espace disponible, le câble d'interconnexion 35 sort verticalement du boîtier 31 du bloc 30 vers le haut pour se rattacher horizontalement au boîtier de l'additif. Un câble 37 d'alimentation auxiliaire - et le cas échéant d'actionnement d'urgence - peut être connecté sous le bloc quand celui-ci comporte un relais nécessitant une telle alimentation ou un circuit coupant l'alimentation de la bobine en fonction de la mise en oeuvre d'un bouton d'arrêt d'urgence. Un câble 38 de liaison avec un autre contacteur 40 à fonction d'inverseur est prévu avec sortie verticale du boîtier 31 vers le haut quand l'ensemble E est agencé en tant qu'ensemble contacteur-inverseur (voir figure 2).

Le circuit imprimé 34 présente (figure 6) un premier connecteur 41 auquel se raccorde le câble 35, un deuxième connecteur 42 auquel se raccorde le câble 36, un troisième connecteur 43 auquel se raccorde le câble 38, un quatrième connecteur 44 auquel se raccorde le câble 37. Le connecteur 42 est avantageusement du type RJ45.

Le bloc de communication 30 peut former avec l'additif 13 et le câble 35 (et éventuellement le câble 38) un sous-ensemble unitaire à adjoindre en tant que tel de manière amovible à l'ensemble E.

## Revendications

1. Ensemble de départ-moteur comprenant un disjoncteur (10) et un contacteur (20) le disjoncteur (10) étant muni d'un additif de signalisation d'état (13) à contacts auxiliaires NO et/ou NC adjoint frontalement au boîtier du disjoncteur, l'ensemble de départ-moteur étant doté d'un circuit imprimé de communication (34) connecté d'une part à la bobine du contacteur et d'autre part à l'additif de signalisation d'état (13) du disjoncteur, où
- le circuit imprimé de communication (34) est intégré dans un bloc de communication (30) fixé ou intégré au boîtier (21) du contacteur (20), à l'avant de celui-ci, **caractérisé par le fait que**
- le circuit imprimé de communication (34) est doté d'un premier connecteur (41) qui assure la liaison avec un câble d'interconnexion (35) relié à l'additif de signalisation, le câble d'interconnexion sortant verticalement du bloc de communication extérieurement aux boîtiers (11,21) des appareils contacteur et disjoncteur,
- le circuit imprimé de communication (34) est doté d'un second connecteur (42) qui assure la liaison avec un contrôleur programmable par l'intermédiaire d'un câble de communication (36).

2. Ensemble de départ-moteur selon la revendication 1, **caractérisé par le fait qu'**une première extrémité du câble de communication (36) est reliée à un concentrateur (39) auquel sont raccordés en parallèle des câbles de communication provenant d'autres ensembles de départ-moteur.

3. Ensemble de départ-moteur selon la revendication 1, **caractérisé par le fait qu'**une deuxième extrémité du câble de communication (36) est reliée au second connecteur (42) par une connexion détachable de type RJ45.

4. Ensemble de départ-moteur selon la revendication 1, **caractérisé par le fait que** le circuit imprimé de communication (34) comprend un troisième connecteur (43) à relier à un contacteur-inverseur.

5. Ensemble de départ-moteur selon la revendication 1, **caractérisé par le fait que** le circuit imprimé (34) présente un quatrième connecteur (44) d'alimentation auxiliaire.

6. Ensemble de départ-moteur selon la revendication 1, **caractérisé par le fait que** le circuit imprimé (34) comporte un évidement (34a) pour l'accès à un poussoir (25) d'un organe de support de contacts mobiles de puissance du contacteur.

7. Ensemble de départ-moteur selon la revendication 1, **caractérisé par le fait que** le bloc de communication (30) est fixé de manière amovible à l'avant d'un bloc de contrôle (22) portant des bornes de contrôle (23) et solidarisé avec le boîtier (21) du contacteur à l'avant de celui-ci.

8. Ensemble de départ-moteur selon la revendication 7, **caractérisé par le fait que** le bloc de communication (30) est connecté frontalement par des broches dans des bornes élastiques du bloc de contrôle (22).

## Claims

1. Motor starter block comprising a circuit breaker (10) and a contactor (20), the circuit breaker (10) being furnished with a status-signalling additive (13) with NO and/or NC auxiliary contacts adjoined frontally to the casing of the circuit breaker, the motor starter block being furnished with a communication printed circuit (34) connected on the one hand to the coil of the contactor and on the other hand to the status signalling additive (13) of the circuit breaker, wherein
- the communication printed circuit (34) is incorporated into a communication unit (30) attached to or incorporated into the casing (21) of the contactor (20) and in the front of the latter, **characterized in that**
- the communication printed circuit (34) is furnished with a first connector (41) which provides the link with an interconnection cable (35) connected to the signalling additive, the interconnection cable exiting vertically from the communication unit outside the casings (11, 21) of the contactor and circuit breaker devices,
- the communication printed circuit (34) is furnished with a second connector (42) which provides the link with a programmable controller by means of a communication cable (36).

2. Motor starter block according to Claim 1, **characterized in that** a first end of the communication cable (36) is connected to a concentrator (39) to which are connected in parallel communication cables originating from other motor starter blocks.

3. Motor starter block according to Claim 1, **characterized in that** a second end of the communication cable (36) is connected to the second connector (42) by a detachable connection of the RJ45 type.

4. Motor starter block according to Claim 1, **characterized in that** the communication printed circuit (34) comprises a third connector (43) to be connected to a reversing contactor.

5. Motor starter block according to Claim 1, **characterized in that** the printed circuit (34) has a fourth connector (44) for auxiliary power supply.

6. Motor starter block according to Claim 1, **characterized in that** the printed circuit (34) comprises a recess (34a) for access to a plunger (25) of a member for supporting movable power contacts of the contactor.

7. Motor starter block according to Claim 1, **characterized in that** the communication unit (30) is removably fastened to the front of a control unit (22) supporting control terminals (23) and secured to the casing (21) of the contactor in the front of the latter.

8. Motor starter block according to Claim 7, **characterized in that** the communication unit (30) is connected frontally by pins in elastic terminals of the control unit (22).

## Patentansprüche

1. Motorabgang-Einheit, die einen Schutzschalter (10) und einen Schütz (20) enthält, wobei der Schutzschalter ((10) mit einer Zustandsanzeige-Zusatzeinrichtung (13) mit NO- und/oder NC-Hilfskontakten versehen ist, die stirnseitig zum Gehäuse des Schutzschalters hinzugefügt ist, wobei die Motorabgang-Einheit mit einer Kommunikations-Leiterplatte (34) versehen ist, die einerseits mit der Spule des Schützes und andererseits mit der Zustandsanzeige-Zusatzeinrichtung (13) des Schutzschalters verbunden ist, wobei
- die Kommunikations-Leiterplatte (34) in einen Kommunikationsblock (30) integriert ist, der am Gehäuse (21) des Schützes (20) vor diesem befestigt oder integriert ist,
**dadurch gekennzeichnet, dass**
- die Kommunikations-Leiterplatte (34) mit einem ersten Verbinder (41) versehen ist, der die Verbindung mit einem Verbindungskabel (35) gewährleistet, das mit der Anzeige-Zusatzeinrichtung verbunden ist, wobei das Verbindungskabel senkrecht aus dem Kommunikationsblock außerhalb der Gehäuse (11, 21) der Schütz- und Schutzschalter-Geräte austritt,
- die Kommunikations-Leiterplatte (34) mit einem zweiten Verbinder (42) versehen ist, der die Verbindung mit einem programmierbaren Steuergerät über ein Kommunikationskabel (36) gewährleistet.

2. Motorabgang-Einheit nach Anspruch 1, **dadurch gekennzeichnet, dass** ein erstes Ende des Kommunikationskabels (36) mit einem Konzentrator (39) verbunden ist, an den Kommunikationskabel parallel angeschlossen sind, die von anderen Motorabgang-Einheiten kommen.

3. Motorabgang-Einheit nach Anspruch 1, **dadurch gekennzeichnet, dass** ein zweites Ende des Kommunikationskabels (36) mit dem zweiten Verbinder (42) über eine lösbare Verbindung vom Typ RJ45 verbunden ist.

4. Motorabgang-Einheit nach Anspruch 1, **dadurch gekennzeichnet, dass** die Kommunikations-Leiterplatte (34) einen dritten Verbinder (43) enthält, der mit einem Wendeschütz zu verbinden ist.

5. Motorabgang-Einheit nach Anspruch 1, **dadurch gekennzeichnet, dass** die Leiterplatte (34) einen vierten Hilfsversorgungs-Verbinder (44) aufweist.

6. Motorabgang-Einheit nach Anspruch 1, **dadurch gekennzeichnet, dass** die Leiterplatte (34) eine Aussparung (34a) für den Zugang zu einem Drücker (25) eines Tragorgans beweglicher Leistungskontakte des Schützes aufweist.

7. Motorabgang-Einheit nach Anspruch 1, **dadurch gekennzeichnet, dass** der Kommunikationsblock (30) lösbar an der Vorderseite eines Steuerblocks (22) befestigt ist, der Steuerklemmen (23) trägt und fest mit dem Gehäuse (21) des Schützes an dessen Vorderseite verbunden ist.

8. Motorabgang-Einheit nach Anspruch 7, **dadurch gekennzeichnet, dass** der Kommunikationsblock (30) durch Stifte in elastischen Klemmen des Steuerblocks (22) stirnseitig verbunden ist.
